# EUROPÄISCHE PATENTSCHRIFT

(11) **EP 0 441 296 B1**
(45) Veröffentlichungstag und Bekanntmachung des Hinweises auf die Patenterteilung: **21.06.1995**
(21) Anmeldenummer: 91101460.3
(22) Anmeldetag: 04.02.1991
(51) Int. Cl.: C04B 28/00, C04B 38/00, E04F 13/02

(54) **Akustikputz**
Acoustic plaster
Enduit acoustique

(30) Priorität: 05.02.1990 DE 4003382
(43) Veröffentlichungstag der Anmeldung: 14.08.1991
(73) Patentinhaber: STO AKTIENGESELLSCHAFT, D-79778 Stühlingen (DE)
(72) Erfinder: Grochal, Peter, Dr. rer. nat. Dipl.-Chem., W-7890 Waldshut-Tiengen 1 (DE)
(74) Vertreter: Patentanwälte Leinweber & Zimmermann

(56) Entgegenhaltungen:
- AT-B- 362 710
- DE-A- 1 943 433
- DE-A- 3 134 682
- DE-A- 3 314 033
- DE-A- 3 433 543
- DE-A- 3 643 634
- DE-C- 3 120 488

## Beschreibung

Die Erfindung bezieht sich auf einen Akustikputz mit einem Bindemittel und einer Mischkomponente in Form von Zusätzen zur Bildung von schallschluckenden Poren.

Bei bekannten Akustikputzen dieser Art (DE-OSen 19 43 433 und 36 43 634) bestehen die der Bildung von schallschluckenden Poren dienenden Zusätze z.B. aus geblähtem vulkanischen Silikatgestein (Perlit, Vermiculite) bzw. Naturbimsgranulat, das aufgrund seiner hochporösen Struktur eine hohe Schallschluckfähigkeit besitzt. Als Bindemittel finden bei den herkömmlichen Akustikputzen Zement, Wasserglas, Kunstharzdispersionen bzw. Mischungen derselben Anwendung.

Die gesamte Matrix eines idealen Akustikputzes sollte im Querschnitt durchgehende Poren haben, die eine sogenannte Luftdurchströmung des Putzes erlauben. Man hat versucht, dies durch die erwähnte Beigabe von porösen Füllstoffen oder aber durch Zugabe von Porenbildnern, d.h. Substanzen zu erreichen,die entweder aufgrund einer chemischen Reaktion Gase freigeben oder aber aufgrund ihrer oberflächenaktiven Wirkung bei mechanischer Beaufschlagung, beispielsweise mit einem sog. Nachmischer zu einer Schaumbläschenbildung und damit zum Entstehen von Poren führen.

Es hat sich nun gezeigt, daß im Falle der Beigabe von porösen Füllstoffen die zum Einsatz gelangenden Bindemittel die Füllstoffporen bereits während des Anrührens zum großen Teil zuschlämmen und nach der Härtung deren Wirksamkeit mindern. Andererseits stehen Poren, die im Bindemittelgefüge durch Porenbildner erzeugt werden, nur kurze Zeit zur Verfügung. Sie werden nämlich durch handwerkliches Verarbeiten des Akustikputzes, wie z.B. Glätten der Oberfläche, zerstört. Bei einem derartigen Glättvorgang wird nämlich die oberste Schicht durch Bindemittel angereichert, was zur Bildung einer sogenannten Sinterhaut führt. Diese muß nach der Trocknung wieder zerkratzt werden, damit eine zumindest teilweise poröse Oberfläche entsteht.

Sowohl die Porosität der Füllstoffe als auch die der künstlich erzeugten Poren in dem Gefüge sind ferner mit dem Nachteil verbunden, daß sie lokal, d.h. örtlich begrenzt und nicht durch die Putzschicht hindurchgehend vorhanden sind, was sich in relativ hohem Strömungswiderstand, d.h. niedrigen akustischen Schallschluckwerten äußert.

Nicht zuletzt daraus resultiert als sehr bedeutender Nachteil der bisher bekannten Akustikputze mit porösen Füllstoffen bzw. künstlich erzeugten Poren, daß sie sich nicht maschinell verarbeiten lassen. Bekannt sind bisher nur gewisse Spritzverfahren, mit deren Hilfe sich nur dünne, wenig effektive und ziemlich bröselige Schichten aufbringen lassen. Auch bei Anwendung dieser Verfahren darf sich, um die akustischen Eigenschaften nicht zu beeinträchtigen, kein Glättvorgang anschließen. Eine maschinelle Verarbeitung herkömmlicher Akustikputze ist mit dem weiteren Mangel verbunden, daß bei Verwendung der üblichen Schneckenputzmaschinen die porösen Füllstoffe zum großen Teil in der Misch- und Fördereinheit zerquetscht werden, so daß der Akustikputz die akustische Wirksamkeit verliert.

An dieser Stelle ist ein weiterer Mangel herkömmlicher Akustikputze zu erwähnen, der darin besteht, daß bei üblicher Applizierung auf der Decke die sich zwangsläufig ergebende Bindemittelausschwämmung durch die natürliche Erdgravitation zu erheblichen Problemen führt. Das Anmachwasser reichert sich nämlich mit den Bindemittelanteilen durch Gravitation und Sedimentation in der untersten Schicht an und bildet dabei ebenfalls eine die Poren verschließende Sinterschicht.

Weiterhin ist es bekannt (DE OS 31 34 682), porenhaltige Masse zur Wärme- und Schalldämmung aus einem hydraulischen Bindemittel, einem bei alkalischem pH-Wert gasabspaltenden Treibmittel in Form von Aluminiumpulver sowie einer wässrigen, alkalischen Kunstharzdispersion, die miteinander gemischt werden, herzustellen. Die Poren werden hier durch das gasabspaltende Treibmittel, das eine Aufblähung der Masse unter starker Volumenvergrößerung bewirkt, gebildet. Auch diese bekannte Masse läßt eine maschinelle Verarbeitung z.B. mit der üblichen Schneckenputzmaschine nicht zu, da die Masse, die nur in statu nascendi förderbar ist, wo sie ihr Volumen vergrößert, durch die Schnecke komprimiert wird. Die schäumende Masse läßt sich während des Aufschäumens weder glätten noch sonstwie bearbeiten, da sie klebrig ist und ihr Volumen ständig zunimmt. Nach der Erstarrung läßt sie sich nicht mehr formen, glätten od. dgl. Sie kann dann nur noch durch Schneiden oder Schleifen bearbeitet werden.

Der Erfindung liegt die Aufgabe zugrunde, einen Akustikputz der eingangs genannten Art zu schaffen, der unter Vermeidung einer Volumenvergrößerung durch Aufschäumen sowohl maschinell als auch von Hand problemlos verarbeitbar ist und bei dem dennoch die hochwirksame Schallabsorption durch durchgehende Poren bei einem niedrigen Strömungswiderstand erhalten bleibt.

Der Akustikputz nach der Erfindung, bei dem diese Aufgabe gelöst ist, ist im wesentlichen gekennzeichnet durch den Einsatz von porenbildenden Zusätzen in Form von Fasern, Blättchen, Kugeln, Kristallen oder feinem Granulat, die allein durch ihre Auflösung nach dem Auftragen und Glätten des Putzes erst während und/oder nach der Bindemittelerstarrung die gewünschte, ihrer ursprünglichen Struktur entsprechende Porenstruktur hinterlassen. Da bei der erfindungsgemäß erzeugten Akustikputzmasse keine Schaumprozesse unter Gasentwicklung stattfinden, ändert diese Masse weder während der Herstellung noch während der Verarbeitung ihr Volumen bzw. ihre Dichte. Man kann sie deshalb von Hand oder maschinell auf große Flächen aufbringen und bearbeiten, z.B. glätten, formen od. dgl. Dadurch, daß sich die fraglichen Zusätze somit erst nach dem Verarbeiten eines derartigen Akustikputzes an der Oberfläche und im Inneren auflösen, erzeugen sie die gewünschte, akustisch hochwirksame Porenstruktur.

Als im Hinblick auf einen einfachen Einsatz sehr zweckmäßig hat es sich herausgestellt, wenn die porenbildenden Zusätze aus Substanzen bestehen, die in wässrigem Milieu auflösbar sind.

Die porenbildenden Zusätze können einmal aus wasseroder alkalilöslichen Polymeren bestehen. Sie können jedoch auch aus wasser-, alkali- oder säurelöslichen anorganischen Substanzen gebildet sein.

In besonders zweckmäßiger Weise finden nur langsam, d.h. im wesentlichen erst nach der Putzapplikation durch Regen oder gezieltes nachträgliches Annässen lösliche Substanzen Anwendung.

Aus den vorstehenden Darlegungen ergibt sich, daß als Material für solche Zusätze wasserlösliche oder alkalilösliche Kunststoffe, mineralische, alkalilösliche Gläser sowie Kristalle und Substanzen, die auch säurelöslich sein können, einsetzbar sind. Eine weitere auf dieser Technologie basierende Möglichkeit ist die Verwendung von leicht löslichen Substanzen, die durch eine dünne, schwerer lösliche Hülle eingekapselt und damit zeitweise geschützt werden, so daß die Auflöseprozesse erst nach einer gewünschten Verzögerungsperiode anfangen. Eine weitere Möglichkeit nach der Erfindung besteht darin, poröse Füllstoffe, wie z.B. Bims, Perlit, Vermiculite in eine langsam lösliche Hülle einzukapseln und so das Eindringen von Bindemittel und das Zuschlämmen der Poren zu verhindern.

Eine andere Variante ist durch alkalische Gläser gegeben, die sich unter der Einwirkung von Flüssigkeiten mit höherem pH-Wert auflösen. Diese können in Form von Fasern, Hohlfasern, Plättchen oder Kugeln, insbesondere Hohlkugeln oder als Granulat vorliegen. Für die Porenbildung kann auch Wasserglas (Alkalisilikat) in fester Form verwendet werden. Vorteilhaft ist es dabei, wenn die Alkalisilikate nur langsam aufgeschlossen werden. Dies kann durch ein günstiges Verhältnis Alkalioxid zu Siliziumdioxid oder durch Einkapselung der löslichen Kristalle erreicht werden.

Die Gruppe der geeigneten, im wäßrigen Milieu löslichen Kunststoffe ist sehr umfangreich und beinhaltet Hydroxyl-, Carbonyl, Carboxyl-, Anhydrid-, Säureamid- u.ä. -haltige Polymere wie Polysaccharide, Polyvinylalkolhol, Polyvinylpyrrolidon, Homo- oder Copolymere mit Acriyl-, Methacryl-, Itacon-, Croton-, Malein-, Fumar- usw. Säuren, Säureamiden bzw. Anhydriden. Schließlich sind auch Polymere mit z.B. Sulfongruppen geeignet. Andererseits können auch amingruppenhaltige, sog. kationische Polymere verwendet werden.

Einsetzbar sind auch sauer reagierende Substanzen, die z.B. carbonathaltige Zuschläge auflösen. Da diese Reaktion relativ spontan abläuft, ist es vorteilhaft, langsam dissoziierende Säuren (z.B. organische Carboxylsäuren, Sulfosäuren oder Anhydride) zu verwenden oder die eine oder andere Komponente temporär einzukapseln. In sehr vorteilhafter Weise trägt Kohlendioxid, das sich beim Auflösen von carbonathaltigen Zuschlägen entwickelt, zur Entstehung von durchgehenden Poren bei.

Als Bindemittel sind für die fraglichen Akustikputze mit eingekapselten porösen Füllstoffen bzw. Porenbildnern wasserlösliche oder dispergierte Polymere, Wasserglas, Zement, Kalk, Gips oder deren Kombinationen geeignet.

## Patentansprüche

1. Akustikputz mit einem Bindemittel und einer Mischkomponente in Form von Zusätzen zur Bildung von schallschluckenden Poren, gekennzeichnet durch den Einsatz von porenbildenden Zusätzen in Form von Fasern, Blättchen, Kugeln, Kristallen oder feinem Granulat, die allein durch ihre Auflösung nach dem Auftragen und Glätten des Putzes während und/oder nach der Bindemittelerstarrung die gewünschte ihrer ursprünglichen Struktur entsprechende Porenstruktur hinterlassen.

2. Akustikputz nach Anspruch 1, dadurch gekennzeichnet, daß die porenbildenden Zusätze aus Substanzen bestehen, die in wässrigem Milieu auflösbar sind.

3. Akustikputz nach Anspruch 1, dadurch gekennzeichnet, daß die porenbildenden Zusätze aus wasser- oder alkalilöslichen Polymeren bestehen.

4. Akustikputz nach Anspruch 1, dadurch gekennzeichnet, daß die porenbildenden Zusätze aus wasser-, alkali- oder säurelöslichen anorganischen Substanzen bestehen.

5. Akustikputz nach einem der Ansprüche 1 bis 4, dadurch gekennzeichnet, daß nur langsam, d.h. erst nach der Putzapplikation durch Regen oder gezieltes nachträgliches Annässen lösliche Substanzen Anwendung finden.

6. Akustikputz nach einem der Ansprüche 1 bis 5, dadurch gekennzeichnet, daß die porenbildenden Zusätze durch in eine langsam lösliche Hülle eingekapselte poröse oder leicht lösliche Füllstoffe gebildet sind.

7. Akustikputz nach Anspruch 6, dadurch gekennzeichnet, daß die langsam lösliche Hülle durch eine dünne, schwerer lösliche Hülle gebildet ist.

8. Akustikputz nach einem der Ansprüche 1 bis 7, dadurch gekennzeichnet, daß die porenbildenden Zusätze durch alkalische Gläser gebildet sind, die sich in basischen Flüssigkeiten mit höherem pH-Wert auflösen.

9. Akustikputz nach einem der Ansprüche 1 bis 5, dadurch gekennzeichnet, daß die porenbildenden Zusätze durch in fester Form vorliegende, ggfs. aufgrund Einkapselung langsam aufschließbare, lösliche Wasserglaspartikel gebildet sind.

## Claims

1. An acoustic plaster having a binder and a mix component in the form of additives for forming sound absorbing pores, characterised by the use of pore-forming additives in the form of fibres, lamellas, spheres, crystals or fine granulated material which leave behind the desired pore structure corresponding to their original structure solely due to their dissolution during and/or after the setting of the binder after the application and smoothing of the plaster.

2. An acoustic plaster according to claim 1, characterised in that the pore-forming additives consist of substances which are soluble in aqueous media.

3. An acoustic plaster according to claim 1, characterised in that the pore-forming additives consist of polymers soluble in water or alkali.

4. An acoustic plaster according to claim 1, characterised in that the pore-forming additives consist of inorganic substances soluble in water, alkali or acid.

5. An acoustic plaster according to any one of claims 1 to 4, characterised in that substances are used which are only slowly soluble, i.e. not until the plaster has been applied, due to rain or deliberate subsequent wetting.

6. An acoustic plaster according to any one of claims 1 to 5, characterised in that the pore-forming additives are formed by porous or readily soluble fillers encapsulated in a slowly soluble covering.

7. An acoustic plaster according to claim 6, characterised in that the slowly soluble covering is formed by a thin, difficultly soluble covering.

8. An acoustic plaster according to any one of claims 1 to 7, characterised in that the pore-forming additives are formed by alkaline glasses which dissolve in basic liquids of higher pH.

9. An acoustic plaster according to any one of claims 1 to 5, characterised in that the pore-forming additives are formed by soluble waterglass particles present in solid form which are optionally made slowly soluble due to encapsulation.

## Revendications

1. Enduit acoustique contenant un liant et un composant de mélange sous la forme d'additifs pour la formation de pores absorbant le son, caractérisé en ce qu'on utilise des additifs porogènes sous la forme de fibres, de lamelles, de perles, de cristaux ou de granules fins, qui, du simple fait de leur dissolution après l'application et le polissage de l'enduit, confèrent la structure poreuse désirée, correspondant à leur structure initiale, pendant et/ou après la solidification du liant.

2. Enduit acoustique selon la revendication 1, caractérisé en ce que les additifs porogènes sont formés de substances qui sont solubles en milieu aqueux.

3. Enduit acoustique selon la revendication 1, caractérisé en ce que les additifs porogènes sont formés de polymères solubles dans l'eau ou en milieu alcalin.

4. Enduit acoustique selon la revendication 1, caractérisé en ce que les additifs porogènes sont formés de substances minérales solubles dans l'eau, dans les alcalis ou dans les acides.

5. Enduit acoustique selon l'une des revendications 1 à 4, caractérisé en ce qu'on utilise des substances qui ne sont que lentement solubles, c'est-à-dire seulement après l'application de l'enduit, sous l'effet de la pluie ou d'un mouillage ultérieur approprié.

6. Enduit acoustique selon l'une des revendications 1 à 5, caractérisé en ce que les additifs porogènes sont formés de charges poreuses ou facilement solubles, encapsulées dans une enveloppe à dissolution lente.

7. Enduit acoustique selon la revendication 6, caractérisé en ce que l'enveloppe à dissolution lente est formée d'une enveloppe mince plus difficilement soluble.

8. Enduit acoustique selon l'une des revendications 1 à 7, caractérisé en ce que les additifs porogènes sont formés de verres alcalins qui se dissolvent dans des liquides basiques ayant un pH plus élevé.

9. Enduit acoustique selon l'une des revendications 1 à 5, caractérisé en ce que les additifs porogènes sont formés de particules solides de verre soluble qui se décomposent éventuellement plus lentement en raison de l'encapsulation.
